# DEMANDE DE BREVET EUROPEEN

(11) **EP 1 262 813 A1**
(43) Date de publication de la demande: **04.12.2002**
(21) Numéro de dépôt: 02405382.9
(22) Date de dépôt: 10.05.2002
(51) Int. Cl.: G02C 5/22, G02C 5/14

(54) **Monture de lunettes**

(30) Priorité: 28.05.2001 FR 0106939
(71) Demandeur: BAB SPORTS S.A., 3960 Sierre (CH)
(72) Inventeur: Pointet, Patrice Marie, 01100 Veyziat (FR)
(74) Mandataire: Kiliaridis, Constantin

(57) **Abrégé**

La présente invention concerne une monture de lunettes(1), notamment pour lunettes de sport, permettant de régler l'inclinaison de la monture par rapport au visage de l'utilisateur pour l'adapter à sa morphologie. Elle comprend, pour chaque branche (2), une pièce (3) articulée par une de ses extrémités à l'extrémité libre (21) de la branche (2). des moyens (4,5) permettant de varier la position angulaire de ladite pièce (3) en par rapport à la branche (2).Cette pièce (3) elle est conçue pour s'appuyer sur la partie supérieure de l'oreille de l'utilisateur. En variant la position angulaire de la pièce (3) par rapport à la branche (2) on varie l'inclinaison de la monture par rapport au visage de l'utilisateur.

## Description

La présente invention concerne une monture de lunettes, notamment de lunettes de sport.

Lorsqu'on achète une paire de lunettes, mis à part les dimensions de la monture, il faut également régler l'inclinaison de la partie de la monture contenant les oculaires par rapport aux branches pour l'adapter à la morphologie du visage de l'utilisateur. Habituellement, ce travail est effectué par le vendeur, soit en déformant l'inclinaison des branches par rapport à la monture contenant le oculaire, soit en déformant la partie postérieure des branche pour obtenir le même résultat, soit dans certains cas en agissant sur la charnière reliant les branches à la monture.

Ces différentes modifications doivent être effectuées par l'opticien ou le vendeur qui doit disposer d'un outillage approprié et également une connaissance approfondie des matériaux utilisés afin de ne pas endommager la monture. Dans les points de vente en libre service, il est pratiquement impossible d'obtenir un tel service.

La présente invention a pour but de proposer des montures de lunettes pouvant être réglées, notamment concernant l'inclinaison de la partie de la monture portant les oculaires par l'utilisateur lui-même sans avoir à recourir à un outillage spécifique.

La monture selon la présente invention est caractérisée par le fait que ladite pièce en arc de courbe est articulée par une de ses extrémités à l'extrémité libre de la branche autour d'un axe approximativement perpendiculaire à la charnière de la branche, que les moyens permettant de régler la position angulaire de ladite pièce en forme d'arc de courbe avec la branche est une série d'éléments mâles et femelles conjugués situés respectivement sur les deux extrémités articulées de la branche et de ladite pièce en forme d'arc de courbe.

L'avantage de ce dispositif est le fait que l'inclinaison est réglée directement par l'utilisateur en modifiant la position angulaire entre lesdites pièces en forme de courbe et les branches de lunettes sans avoir à utiliser un outillage spécialisé.

Selon une variante préférée, la pièce en forme d'arc de cercle présente sur son extrémité libre une surépaisseur munie d'un logement agencé pour recevoir l'extrémité libre de la branche et limiter le débattement angulaire des deux éléments ainsi articulés.

Enfin selon l'exécution réalisée, l'assemblage de l'extrémité de chaque branche à chacune desdites pièces en arc de courbe est réalisé par une cheville traversant au moins partiellement les deux éléments et fixée à cran.

L'invention sera décrite plus en détail à l'aide du dessin annexé.

La figure 1 est une vue de côté d'une monture selon l'invention.

La figure 2 est une vue similaire à la précédente, la position angulaire entre l'élément en forme de courbe et la branche étant modifiée.

La figure 3 est une vue partielle et en coupe des extrémités articulées d'une branche avec l'élément en forme de courbe.

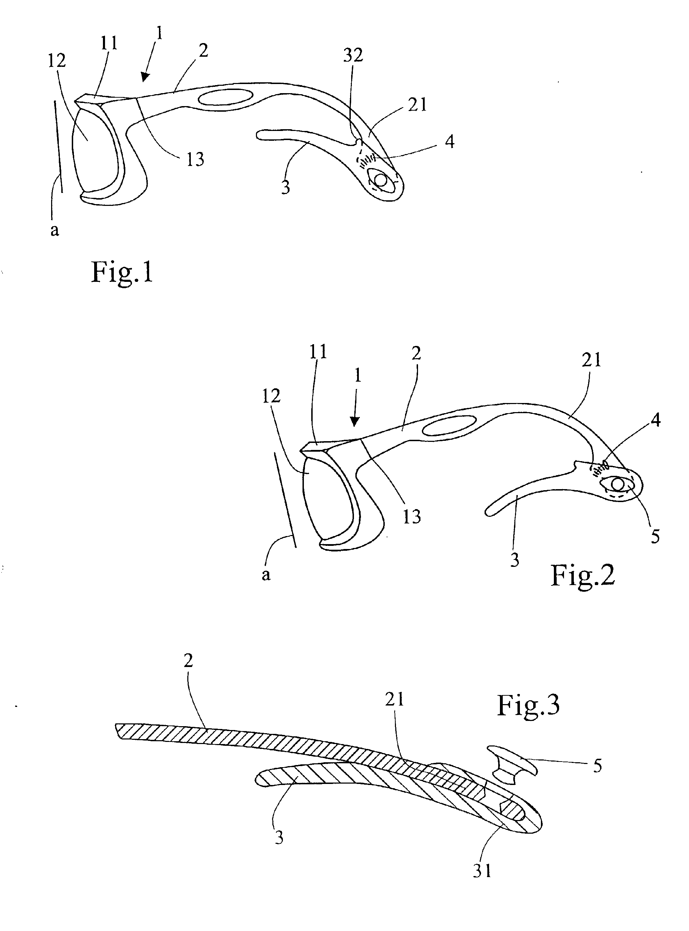

Une monture de lunettes 1 est représentée aux figures 1 et 2 comprenant la partie antérieure de la monture 11 soutenant les oculaires 12, des branches 2 articulées à la monture par des charnières 13. A la partie libre 21 de chaque branche 2 est articulée à une pièce 3 en forme d'arc de courbe. Des éléments conjugués mâles et femelles 4 situés respectivement sur l'extrémité de la branche 21 et celle de la pièce 3 permettent d'assurer une position angulaire relative entre la pièce 3 et la branche 2. Dans le cas présent, nous avons illustré trois éléments 4, néanmoins le nombre peut varier. Les éléments mâles viennent se loger dans les éléments femelles et on peut passer d'une position à l'autre en appliquant un effort sur la branche 2 de l'élément 3 pour changer la position angulaire.

Entre les deux figures 1 et 2 on voit qu'en modifiant l'angle entre la branche 2 et la pièce 3 on modifie l'inclinaison du plan la monture illustré par un trait a.

L'élément 3, comme représenté à la figure 3, est muni à son extrémité d'articulation, d'une surépaisseur 33 munie d'une fente à l'intérieur de laquelle vient se loger l'extrémité 21 de la branche 2. Ce logement délimité par des parois limitant le débattement angulaire maximum des éléments comme représenté aux figures 1 et 2. En effet, à la figure 1, on voit l'extrémité 32 de l'élément 3 qui vient buter contre la branche de la lunette de la branche 2 empêchant de réduire l'angle entre les deux éléments, tandis qu'une autre paroi non visible sur le dessin 2, empêche d'ouvrir plus l'angle entre les deux éléments comme représenté à la figure 2.

Pour l'assemblage des deux éléments 3 et 2, on utilise une cheville sous forme de bouton-pression 5 qui vient se loger dans un trou tronconique formé entre une partie de l'élément 3 et la branche 2. Bien entendu ceci n'est qu'une réalisation possible, d'autres moyens d'assemblage peuvent être utilisés en fonction des matériaux également utilisés.

Ce type de montures, en particulier proposées pour des lunettes de sport sont faites d'un matériau synthétique, néanmoins l'invention peut être réalisée avec n'importe quelle monture faite de n'importe quel matériau.

## Revendications

1. Monture de lunettes, notamment pour lunettes de sport, chaque branche de la monture étant munie de moyens permettant de régler l'inclinaison de la monture par rapport au visage de l'utilisateur pour l'adapter à sa morphologie, comprenant une pièce ayant la forme d'un arc de courbe fixée par une de ses extrémités à l'extrémité libre de la branche, des moyens permettant de varier la position angulaire de ladite pièce en forme d'arc de courbe par rapport à la branche, ladite pièce en arc de courbe s'étendant de l'extrémité libre de chaque branche vers la partie antérieure de chaque branche, et elle est conçue pour s'appuyer sur la partie supérieure de l'oreille de l'utilisateur,
**caractérisée par le fait que** ladite pièce en arc de courbe est articulée par une de ses extrémités à l'extrémité libre de la branche autour d'un axe approximativement perpendiculaire à la charnière de la branche, que les moyens permettant de régler la position angulaire de ladite pièce en forme d'arc de courbe avec la branche est une série d'éléments mâles et femelles conjugués situés respectivement sur les deux extrémités articulées de la branche et de ladite pièce en forme d'arc de courbe.

2. Monture selon l'une des revendications 1, **caractérisée par le fait que** la pièce en forme d'arc de courbe présente sur son extrémité d'articulation une surépaisseur munie d'un logement agencé pour recevoir l'extrémité libre de la branche et limiter le débattement angulaire des deux éléments ainsi articulés.

3. Monture selon la revendication 2, **caractérisée par le fait que** l'assemblage de l'extrémité de chaque branche à ladite pièce en arc de cercle est réalisée par une cheville traversant au moins partiellement les deux éléments et est tenue en place à cran.
